# EUROPÄISCHE PATENTSCHRIFT

(11) **EP 1 791 717 B1**
(45) Veröffentlichungstag und Bekanntmachung des Hinweises auf die Patenterteilung: **25.05.2011**
(21) Anmeldenummer: 05771875.1
(22) Anmeldetag: 06.08.2005
(51) Int. Cl.: B60N 2/06, B60N 2/07, B60N 2/02, B60N 2/44

(54) **VERSTELLVORRICHTUNG, INSBESONDERE FÜR DEN SITZ EINES FAHRZEUGS**
ADJUSTING DEVICE, IN PARTICULAR FOR THE SEAT OF A MOTOR VEHICLE
DISPOSITIF DE REGLAGE, EN PARTICULIER POUR LE SIEGE D'UN VEHICULE A MOTEUR

(30) Priorität: 07.09.2004 DE 102004043630
(43) Veröffentlichungstag der Anmeldung: 06.06.2007
(73) Patentinhaber: Johnson Controls GmbH, 51399 Burscheid (DE)
(72) Erfinder: HAKE, Ernst-Jürgen, 42477 Radevormwald (DE); ENGELS, Bernd, 42897 Remscheid (DE); ZYNDA, Martin, 51399 Burscheid (DE)
(74) Vertreter: Hemmelmann, Klaus
(86) Internationale Anmeldenummer: PCT/EP2005/008549
(87) Internationale Veröffentlichungsnummer: WO 2006/027066

(56) Entgegenhaltungen:
- EP-A- 0 277 069
- WO-A-2004/005066
- US-A- 5 445 354

## Beschreibung

### Beschreibung

Die Erfindung betrifft eine Verstellvorrichtung, insbesondere für den Sitz eines Fahrzeugs, mit mindestens einer ersten Schiene und einer gegenüber der ersten Schiene verschieblich ausgebildeten zweiten Schiene, einer mit der ersten Schiene dreh- und schubfest verbundenen Spindel und einem an der zweiten Schiene angeordneten, von der Spindel durchdrungenen Getriebegehäuse, welches zur Aufnahme mindestens eines mit der Spindel wirkenden Getriebeelements vorgesehen ist, wobei das Getriebegehäuse unmittelbar formschlüssig an der zugeordneten Schiene befestigt ist.

### Stand der Technik

Eine gattungsgemäße Verstellvorrichtung zur Längsverstellung eines Kraftfahrzeugsitzes ist aus der internationalen Patentanmeldung WO 2004/005066 A1 bekannt. Die Verstellvorrichtung besteht aus einer Oberschiene und einer gegenüber dieser ersten Schiene verschieblich ausgebildeten zweiten Schiene in Form einer Unterschiene. In der Unterschiene ist eine Gewindespindel dreh- und schubfest angeordnet. Die Spindel durchdringt ein mit der Oberschiene verbundenes Getriebegehäuse, welches zur Aufnahme eines mit der Spindel wirkenden Getriebeelements in Form einer von einem Schneckengetriebe antreibbaren Spindelmutter vorgesehen ist. Das Getriebegehäuse ist dabei unmittelbar formschlüssig an der Oberschiene befestigt und wird durch einen Stoffschluss, beispielsweise durch Verschweißen, zusätzlich gesichert.

Ein weiterer Sitzversteller der eingangs genannten Art wird in der internationalen Patentanmeldung WO 2002/070299 A1 beschrieben. Auch dort ist das Getriebe mit der Oberschiene feststehend gekoppelt und durchbricht mit seinem kastenförmigen Gehäuse im Bereich einer Ausnehmung die obere Wandung der Oberschiene.

Diese Ausführungen weisen den Nachteil eines schlechten Toleranzausgleichs hinsichtlich der Höhenlage von Spindel und/oder Spindelmutter auf.

Eine weitere Verstellvorrichtung wird in der Offenlegungsschrift DE 1 755 740 offenbart. Sie besteht aus zwei parallelen, sitzseitigen Gleitschienen, die in am Fahrzeugboden befestigten Führungsschienen gleiten. An den Gleitschienen sind seitlich Gewindespindeln starr befestigt, während an den Führungsschienen Getriebegehäuse angeordnet sind, welche drehbare Gewindemuttern und deren Antriebsmittel aufnehmen. Die Getriebegehäuse bestehen jeweils aus einem die drehbaren Bauteile unmittelbar aufnehmenden Getriebeblock, der aus zwei miteinander verschraubten Kunststoffsegmenten zusammengesetzt ist. Der Getriebeblock ist unter Einlage eines dämpfenden elastischen Futters in einer an der Führungsschiene befestigten Metalltasche derart gelagert, dass er sich in einer zur Spindellängsrichtung senkrechten Ebene verschieben und Abweichungen in Parallelität sowie Höhendifferenzen aufgleichen kann.

Ein derartiger Aufbau weist den Nachteil offenliegender Spindeln auf, welche Verschmutzungen oder gar Verletzungen hervorrufen können. Darüber hinaus ist der Raumbedarf dieser Verstellvorrichtung erheblich.

Die Druckschrift DE 198 61 100 A1 beschreibt eine gleichfalls gattungsgemäße Verstellvorrichtung, bei welcher das Getriebegehäuse aus mehreren ineinander gesteckten, die drehbaren Bauteile aufnehmenden Platten besteht, die von einer U-förmigen Halterung teilweise umfangen werden. Die Halterung ist an der Sitzschiene befestigt, wobei Entkoppelungselemente zwischen der Halterung und dem Getriebegehäuse derart angeordnet sind, dass Toleranzen ausgeglichen und Geräusche entkoppelt werden. Die Spindel durchdringt sowohl die U-förmige Halterung im Bereich beider Schenkel als auch das Getriebegehäuse. Spindel, Getriebegehäuse und Halterung sind dabei innerhalb des Schienenpaares angeordnet und somit platzsparend und geschützt untergebracht.

Nachteilig ist hingegen die aufwendige Anbringung des Getriebegehäuses an der Oberschiene.

In den Druckschriften EP 0 277 069 und US 5,445,354 werden ferner Spindelantriebe für Sitzversteller mit schubfesten, aber drehbaren Spindeln offenbart.

### Aufgabe

Der Erfindung liegt die Aufgabe zugrunde, eine Verstellvorrichtung mit einem einfach und sicher anzubringenden Getriebegehäuse bereitzustellen, welche auf einfache Weise Toleranzen in der Höhenlage von Spindel oder Spindelmutter ausgleicht.

### Lösung

Die Aufgabe wird bei einer gattungsgemäßen Vorrichtung dadurch gelöst, dass das Getriebegehäuse in die zweite Schiene, insbesondere die Sitzschiene (Oberschiene) eines Fahrzeugsitzes, schubfest und höhenverlagerbar eingelassen ist. Die Verlagerung gleicht dabei Höhentoleranzen zwischen Spindel und Getriebegehäuse aus.

Dabei ist die Spindel vorzugsweise an der Bodenschiene des Kraftfahrzeugsitzes angeordnet. Ferner kann mit Vorteil vorgesehen werden, dass in dem Getriebegehäuse eine über ein Schneckengetriebe antreibbare Spindelmutter angeordnet wird.

Mit Vorteil weist die zweite Schiene mindestens einen vorzugsweise vertikalen Schenkel mit Rasteinrichtungen auf, in welche das Getriebegehäuse einsetzbar ist. Die Rasteinrichtungen können mehrere in Schienenlängsrichtung zueinander beabstandete Rastöffnungen umfassen, in welche an das Getriebegehäuse einstückig angeformte oder gesondert eingelassene Rastvorsprünge einsetzbar sind.

Besonders günstig ist eine Anordnung, bei welcher die Rastöffnungen an einander gegenüberliegenden, im Wesentlichen parallel zueinander verlaufenden Schenkeln der zweiten, zumindest anteilig U-förmig verlaufenden Schiene angeordnet sind. Das Getriebegehäuse kann dabei mit geringer Vorspannung zwischen die Schenkel der Schiene geklemmt werden, wobei die nach beiden Seiten auskragenden Rastvorsprünge die einander gegenüberliegenden Rastöffnungen durchdringen. Die schubfeste Befestigung des Getriebegehäuses erfolgt dadurch, dass, in Schienenlängsrichtung gesehen, die Breite der Rastvorsprünge etwa der Breite der Rastöffnungen entspricht. Die Rastöffnungen weisen jedoch mit Vorteil eine größere Höhe als die Rastvorsprünge auf, um die zuvor beschriebene Höhenverlagerung des Getriebegehäuses in der Schiene zu ermöglichen.

Darüber hinaus können die Rastvorsprünge des Getriebegehäuses das Einsetzen in die Rastöffnungen erleichternde Einlaufschrägen aufweisen. In Abhängigkeit von der Einbausituation und den verwendeten Werkstoffen kann dabei auf ein Aufspreizen der Schiene während der Montage des Getriebegehäuses verzichtet werden.

Nach einer besonderen Ausbildung der Erfindung weist das Getriebegehäuse eine durch die Aufnahme der Spindel verlaufende Teilung auf. Die Getriebeelemente werden bei der Montage in das geteilte Gehäuse eingelegt, das nachfolgend geschlossen und in die Schiene eingefügt wird. Falls Montage des Getriebes und Einbau in die Schiene nicht unmittelbar aufeinander folgen, ist es sinnvoll, die Gehäusehälften zumindest vorübergehend unmittelbar miteinander zu verbinden.

Alternativ kann das Getriebegehäuse einstückig ausgebildet werden. In diesem Fall weist es einen von außen bis in den Bereich der Spindelaufnahme verlaufenden Schacht auf, in welchen das mit der Spindel wirkende Getriebeelement einsetzbar ist. Falls dieser Schacht sacklochartig in dem Getriebegehäuse endet, können die mit einer Außenverzahnung versehene Spindelmutter und eine diese in Drehung versetzende Antriebsschnecke einschließlich ihrer Lagerbuchsen mit der gewünschten Ausrichtung nacheinander oder gemeinsam in den Schacht eingelassen werden. Spätestens nach dem Einsetzen des Getriebegehäuses in die zugeordnete Schiene sind die Einbauteile in ihrer Designposition gesichert.

### Figuren

Die Figuren stellen beispielhaft und schematisch verschiedene Ausführungen der Erfindung dar. Es zeigen:
- Fig. 1: einen mittigen Schnitt B-B durch eine erste erfingdungsgemäß ausgestaltete Verstellvorrichtung,
- Fig. 2: einen mittigen Längsschnitt durch die Verstellvorrichtung nach Fig. 1,
- Fig. 3: einen seitlichen Schnitt E-E der Einbausituation nach Fig. 1 und 2,
- Fig. 4: einen Schnitt C-C des Getriebegehäuses nach Fig. 1 bis 3,
- Fig. 5: einen Schnitt D-D durch eine andere erfindungsgemäße Verstellvorrichtung,
- Fig. 6: einen mittigen Schnitt (analog B-B) durch eine andere Verstellvorrichtung gemäß vorliegender Erfindung,
- Fig. 7: einen mittigen Längsschnitt durch die Verstellvorrichtung nach Fig. 6,
- Fig. 8: einen Schnitt D-D durch das Getriebegehäuse nach Fig. 6 und 7,
- Fig. 9: einen Schnitt C-C durch die Verstellvorrichtung nach Fig. 6 bis 8.

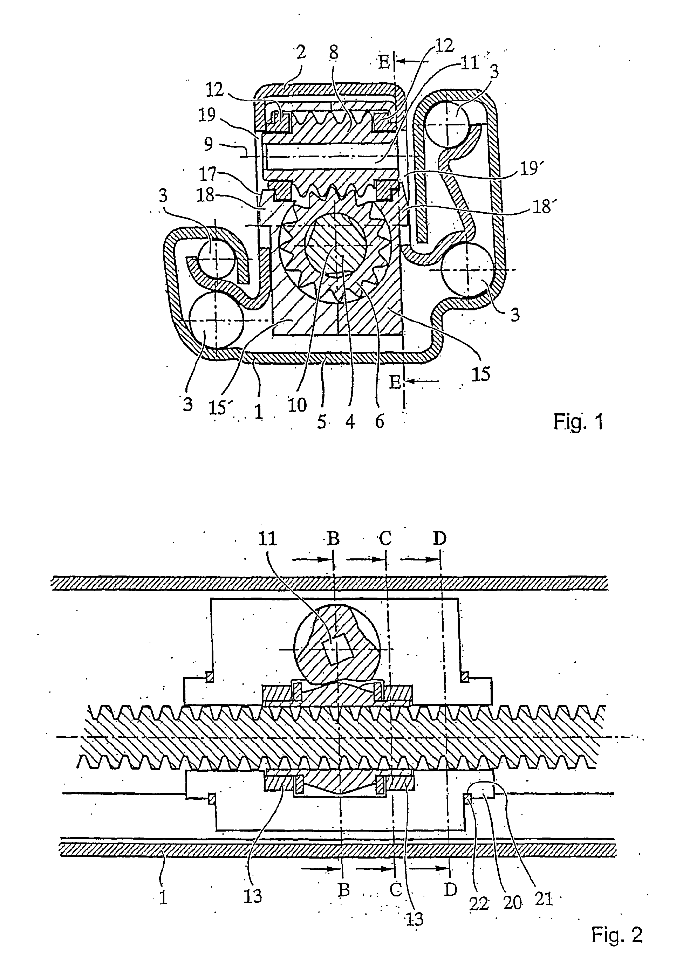

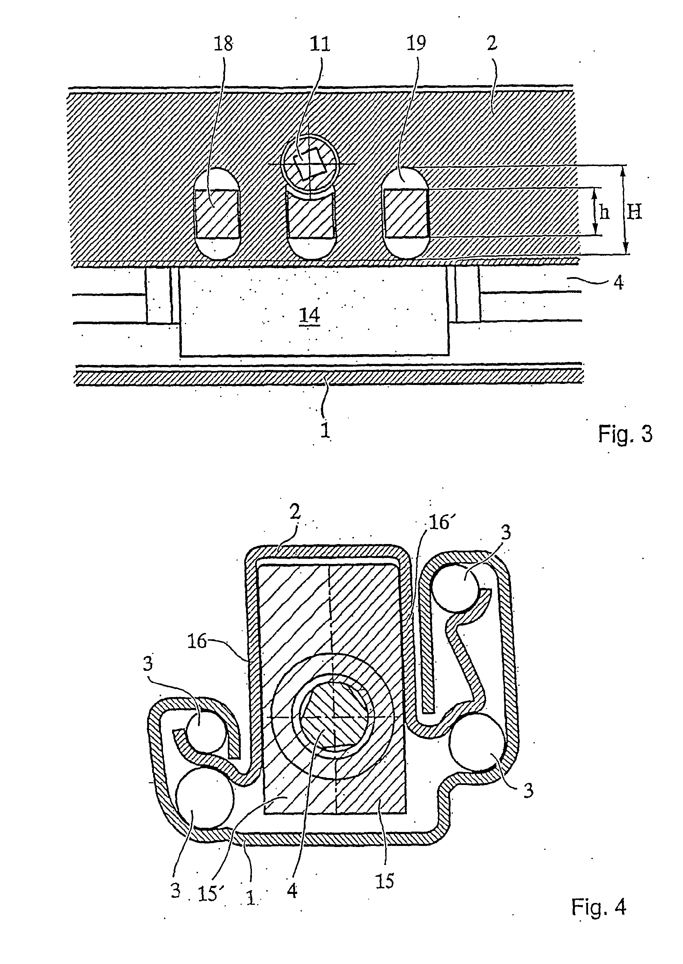

Die in den Fig. 1 bis 4 dargestellte Verstellvorrichtung besteht aus einer ersten, mit dem Fahrzeugboden verschraubbaren Unterschiene 1 und einer in dieser verschieblich geführten, mit dem Fahrzeugsitz verbindbaren Oberschiene 2. Im Umklammerungsbereich von Unterschiene 1 und der im zentralen Schienenbereich U-förmig gestalteten Oberschiene 2 sind kugelförmige Wälzkörper 3 angeordnet, welche die Verschiebekräfte bei der Längsverstellung des Fahrzeugsitzes gegenüber dem Fahrzeugboden verringern.

Innerhalb der Unterschiene 1 ist starr eine Spindel 4 angeordnet, die sich äquidistant zur Schienenunterseite 5 der Unterschiene 1 in Schienenlängsrichtung erstreckt. Auf der Spindel 4 läuft eine drehbare Spindelmutter 6, die auf ihrer Außenseite mit einer Verzahnung 7 versehen ist. In diese Verzahnung 7 greift eine Antriebsschnecke 8 ein, deren Drehachse 9 gegenüber der Längsachse 10 von Spindel 4 bzw. Spindelmutter 6 um 90° gedreht und nach oben, also in Richtung der Oberschiene 2, versetzt verläuft. Die Antriebsschnecke 8 weist in ihrem Inneren eine quadratische Ausnehmung 11 auf, in welche das komplementäre Abtriebsstück einer nicht dargestellten, flexiblen Antriebswelle eines elektromotorischen Antriebs einsteckbar ist. Die Antriebsschnecke 8 ist somit durch den elektromotorischen Antrieb wahlweise nach links oder rechts drehbar und bewirkt eine Rotation der Spindelmutter 6. Der Schneckenantrieb sorgt dabei für die gewünschte Untersetzung sowie eine Selbsthemmung des Getriebes.

Durch die Drehung der Spindelmutter 6 wird diese gegenüber der Spindel 4 in Schienenlängsrichtung verschoben. Spindelmutter 6 und Antriebsschnecke 8 sind mittels Gleitlager 12, 13 in einem Getriebegehäuse 14 drehbar angeordnet, das aus zwei im Bereich der Spindeldurchführung aneinandergefügten Gehäusesegmenten 15, 15' besteht. Das Getriebegehäuse 14 füllt den U-förmigen Bereich der Oberschiene 2 im Wesentlichen aus und ist, da die Breite des Getriebegehäuses 14 etwa der lichten Breite der Oberschiene 2 entspricht, mit leichter Vorspannung zwischen deren Schenkel 16, 16' geklemmt. Diese Klemmkraft wirkt einem Auseinanderfallen der Gehäusesegmente 15, 15' entgegen.

Aus dem Getriebegehäuse 14 kragen nach beiden Seiten mit Einlaufschrägen 17 ausgestattete, einstückig angeformte Rastvorsprünge 18, 18' aus, die formschlüssig in Rastöffnungen 19, 19' der Oberschiene 2 eingreifen und der Schubübertragung zwischen Getriebegehäuse 14 und Oberschiene 2 in Schienenlängsrichtung dienen. Die von der Spindel 4 auf die Spindelmutter 6 ausgeübte Verschiebekraft wird somit durch das Getriebegehäuse 14 und mittels des beschriebenen Formschlusses auf die Oberschiene 2 übertragen, die sich bei Drehung der Antriebsschnecke 8 gegenüber der Unterschiene 1 verschiebt und den Fahrzeugsitz in die gewünschte Längsposition verstellt.

Die Höhe h der Rastvorsprünge 18, 18' ist geringer als die Höhe H der zugeordneten Rastöffnung 19, 19', so dass sich das Getriebegehäuse 14 innerhalb der Oberschiene 2 zum Ausgleich von Toleranzen nach oben oder unten bewegen kann. Zu diesem Zweck ist das Getriebegehäuse 14 derart dimensioniert, dass es in Designposition gegenüber Unterschiene 1 und Oberschiene 2 beabstandet ist.

Die Rastöffnungen 19, 19' können bei einem Fahrzeugsitz ohne elektrische Verstellung von einem mechanisch lösbaren Riegel durchdrungen werden und der Verriegelung zwischen Unterschiene 1 und Oberschiene 2 dienen. Sie sind in diesem Fall also standardmäßig vorhanden und müssen zur Durchführung der Erfindung nicht gesondert eingebracht werden.

Das Getriebegehäuse 14 ist stirnseitig im Bereich der Spindeldurchführung mit zylinderförmigen Zapfen 20 versehen, in welche jeweils eine radial umlaufende Nut 21 eingeformt ist. In jede Nut 21 ist ein Sicherungsring 22 eingesetzt, der die Gehäusesegmente 15, 15' in ihrer Lage zueinander sichert und eine Funktionsprüfung des Getriebes vor dem Einbau in die Oberschiene 2 ermöglicht.

Das Getriebegehäuse 14 wird mit eingeführter Spindel 4 von unten in den gegebenenfalls vorübergehend elastisch geweiteten, U-förmigen Bereich der Oberschiene 2 eingeführt und dort verrastet, bevor diese in die Unterschiene 1 eingeschoben wird. Nachfolgend wird die Spindel 4 an beiden Enden starr mit der Unterschiene 1 verbunden, beispielsweise durch Verschrauben oder Vernieten.

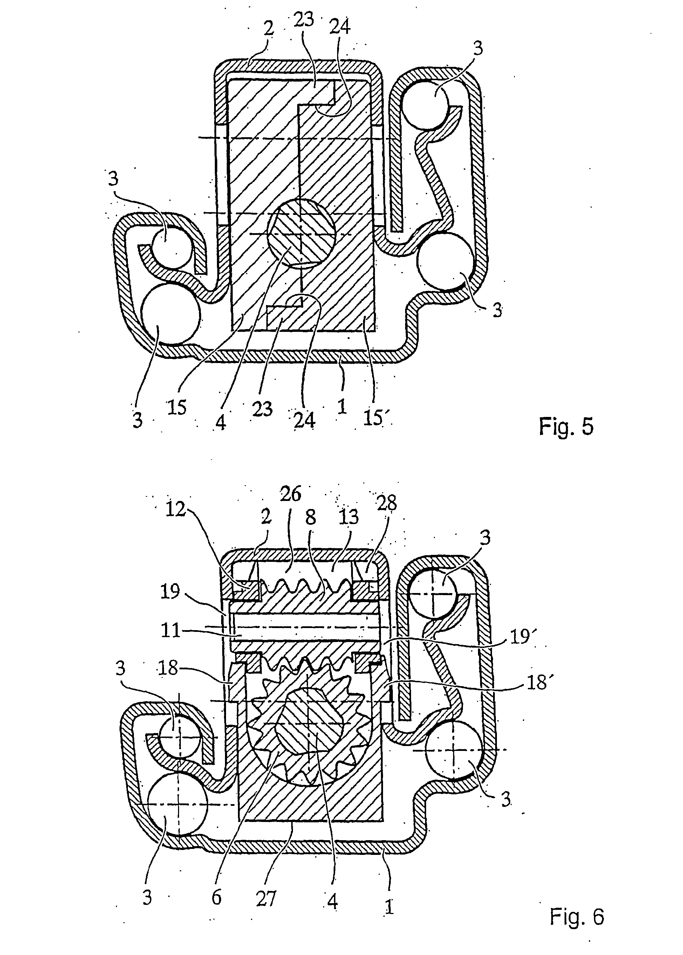

Zur Erleichterung der Ausrichtung der Gehäusesegmente 15, 15' zueinander können diese, wie in Fig. 5 gezeigt, mit in die Teilungsebene hineinragenden Vorsprüngen 23 ausgestattet werden, die mit Ausnehmungen 24 in dem jeweils anderen Gehäusesegment 15', 15 korrespondieren. Vorzugsweise sind auch dabei beide Gehäusesegmente 15,15' konturgleich ausgebildet.

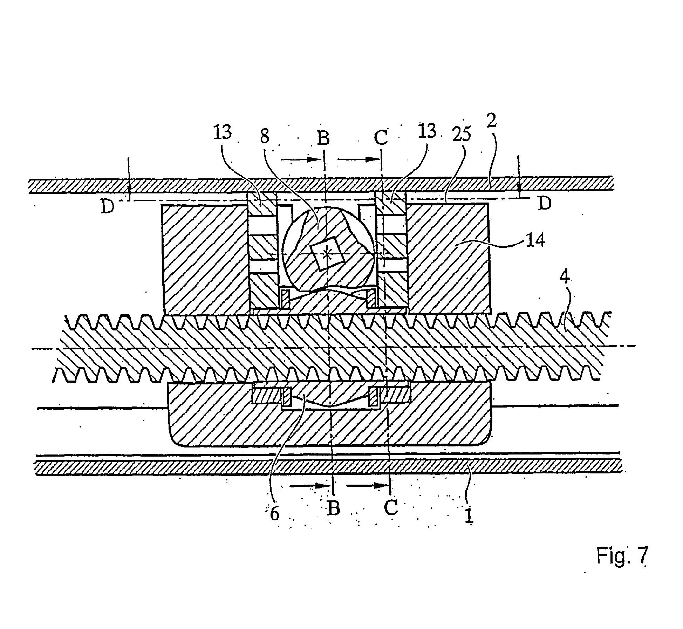

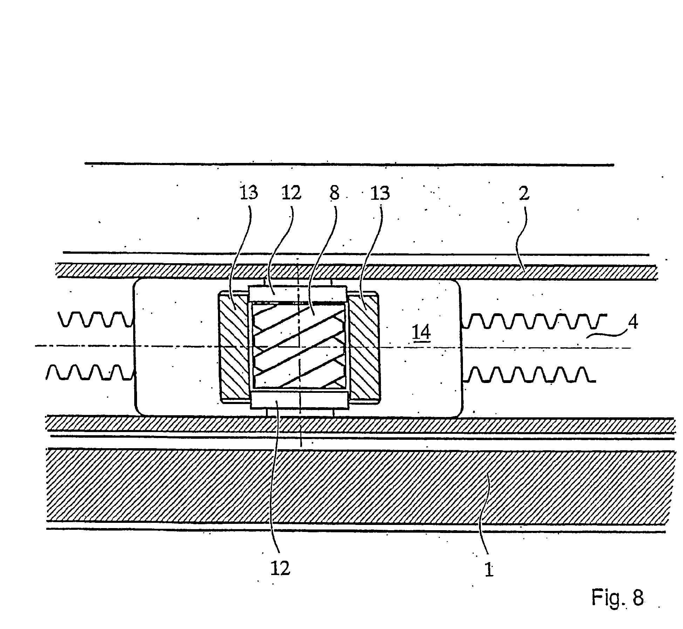

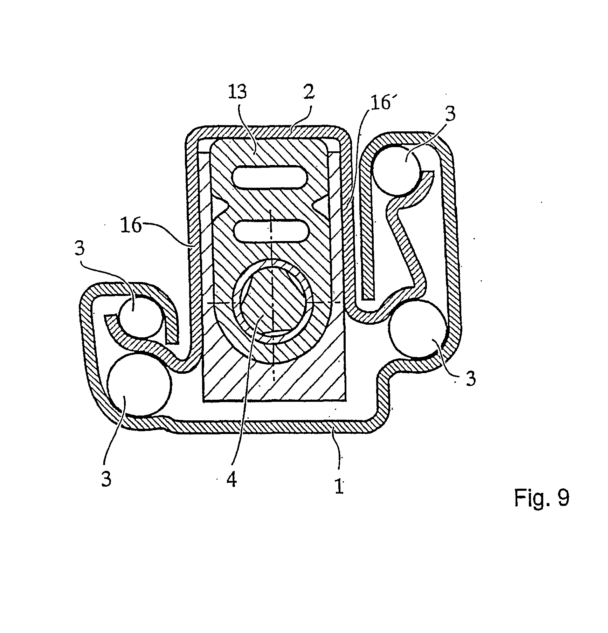

Das Getriebegehäuse 14 der Ausführung nach Fig. 6 bis 9 ist einteilig ausgeführt. Es weist einen sich von der Oberseite 25 des Getriebegehäuses 14 senkrecht nach unten erstreckenden Schacht 26 mit im Wesentlichen rechteckigen Querschnitt auf, der sacklochartig bis nahe an die Unterseite 27 des Getriebegehäuses 14 heranreicht und seitlich von der Spindel 4 durchdrungen wird. Die Gleitlager 13 der Spindelmutter 6 sind plattenartig ausgebildet und werden bei der Montage des Getriebes gemeinsam mit dieser von oben in den Schacht 26 eingeführt, bis die Spindelmutter 6 ihre Designposition eingenommen hat. Die Antriebsschnecke 8 wurde zuvor mit ihren Gleitlagern 12, gegenüber der Spindelmutter 6 um 90° gedreht, gleichfalls zwischen den plattenartigen Gleitlagern 13 angeordnet und nach oben hin durch Absätze 28 an den Gleitlagern 13 gesichert. Die plattenartigen Gleitlager 13, die aus einem Kunststoff mit niedrigem Reibkoeffizienten (z. B. POM) gefertigt werden können, reichen in Designposition bis an die Oberschiene heran, sind jedoch federartig ausgebildet (siehe Fig. 9) und können daher bei einer Verlagerung des Getriebegehäuses nach oben elastisch komprimiert werden. Ein Toleranzausgleich ist somit gleichfalls möglich.

### Bezugszeichen

- 1: Unterschiene
- 2: Oberschiene
- 3: Wälzkörper
- 4: Spindel
- 5: Schienenunterseite
- 6: Spindelmutter
- 7: Verzahnung
- 8: Antriebsschnecke
- 9: Drehachse (der Antriebsschnecke)
- 10: Längsachse (der Spindel bzw. Spindelmutter)
- 11: Ausnehmung
- 12: Gleitlager (der Antriebsschnecke)
- 13: Gleitlager (der Spindelmutter)
- 14: Getriebegehäuse
- 15: Gehäusesegment
- 16: Schenkel
- 17: Einlaufschräge
- 18: Rastvorsprung
- 19: Rastöffnung
- 20: Zapfen
- 21: Nut
- 22: Sicherungsring
- 23: Vorsprung
- 24: Ausnehmung
- 25: Oberseite (des Getriebegehäuses)
- 26: Schacht
- 27: Unterseite (des Getriebegehäuses)
- 28: Absatz

## Patentansprüche

1. Verstellvorrichtung, insbesondere für den Sitz eines Fahrzeugs, mit mindestens einer ersten Schiene und einer gegenüber der ersten Schiene verschieblich ausgebildeten zweiten Schiene, einer mit der ersten Schiene dreh- und schubfest verbundenen Spindel (4) und einem an der zweiten Schiene angeordneten, von der Spindel durchdrungenen Getriebegehäuse (14), welches zur Aufnahme mindestens eines mit der Spindel wirkenden Getriebeelements vorgesehen ist, wobei das Getriebegehäuse (14) unmittelbar formschlüssig an der zugeordneten zweiten Schiene befestigt ist, **dadurch gekennzeichnet, dass** das Getriebegehäuse (14) in die zweite Schiene, insbesondere die Oberschiene (2) eines Fahrzeugsitzes, schubfest und höhenverlagerbar eingelassen ist.

2. Verstellvorrichtung nach Anspruch 1, **dadurch gekennzeichnet, dass** die Spindel (4) an der Unterschiene (1) eines Fahrzeugsitzes angeordnet ist.

3. Verstellvorrichtung nach Anspruch 1 oder 2, **dadurch gekennzeichnet, dass** in dem Getriebegehäuse (14) eine über ein Schneckengetriebe antreibbare Spindelmutter (6) angeordnet ist.

4. Verstellvorrichtung nach einem der vorhergehenden Ansprüche, **dadurch gekennzeichnet, dass** die zweite Schiene mindestens einen vorzugsweise vertikalen Schenkel (16) mit Rasteinrichtungen aufweist, in welche das Getriebegehäuse (14) einsetzbar ist.

5. Verstellvorrichtung nach Anspruch 4, **dadurch gekennzeichnet, dass** die Rasteinrichtungen in Schienenlängsrichtung zueinander beabstandete Rastöffnungen (19), (19') aufweisen, in welche Rastvorsprünge (18), (18') des Getriebegehäuses (14) einsetzbar sind.

6. Verstellvorrichtung nach Anspruch 5, **dadurch gekennzeichnet, dass** die Rastöffnungen (19), (19') an einander gegenüberliegenden, im Wesentlichen parallel zueinander verlaufenden Schenkeln (16), (16') der zweiten Schiene angeordnet sind.

7. Verstellvorrichtung nach Anspruch 5 oder 6, **dadurch gekennzeichnet, dass** die Rastvorsprünge (18), (18') des Getriebegehäuses (14) das Einsetzen in die Rastöffnungen (19), (19') erleichternde Einlaufschrägen (17) aufweisen.

8. Verstellvorrichtung nach einem der vorhergehenden Ansprüche, **dadurch gekennzeichnet, dass** das Getriebegehäuse (14) eine durch die Aufnahme der Spindel (4) verlaufende Teilung in Gehäusesegmente (15), (15') aufweist.

9. Verstellvorrichtung nach einem der Ansprüche 1 bis 7, **dadurch gekennzeichnet, dass** das Getriebegehäuse (14) einstückig ausgebildet ist und einen von außen bis in den Bereich der Spindelaufnahme verlaufenden Schacht (26) aufweist, in welchen das mit der Spindel (4) wirkende Getriebeelement einsetzbar ist.

## Claims

1. Adjusting device, in particular for the seat of a vehicle, with at least one first rail and one second rail designed to be displaceable in relation to the first rail, a spindle (4) connected to the first rail in a manner fixed against rotation and shearing, and a gear housing (14) which is arranged on the second rail, is penetrated by the spindle and is provided for receiving at least one gear element acting together with the spindle, wherein the gear housing (14) is fastened directly in a form-fitting manner to the associated second rail, **characterized in that** the gear housing (14) is embedded in the second rail, in particular the upper rail (2) of a vehicle seat, in a manner fixed against shearing and so as to be vertically displaceable.

2. Adjusting device according to Claim 1, **characterized in that** the spindle (4) is arranged on the lower rail (1) of a vehicle seat.

3. Adjusting device according to Claim 1 or 2, **characterized in that** a spindle nut (6) which can be driven via a worm gear is arranged in the gear housing (14).

4. Adjusting device according to one of the preceding claims, **characterized in that** the second rail has at least one preferably vertical limb (16) with latching devices into which the gear housing (14) can be inserted.

5. Adjusting device according to Claim 4, **characterized in that** the latching devices have latching openings (19), (19') which are spaced apart from one another in the longitudinal direction of the rail and into which latching projections (18), (18') of the gear housing (14) can be inserted.

6. Adjusting device according to Claim 5, **characterized in that** the latching openings (19), (19') are arranged on mutually opposite and substantially parallel limbs (16), (16') of the second rail.

7. Adjusting device according to Claim 5 or 6, **characterized in that** the latching projections (18), (18') of the gear housing (14) have run-in slopes (17) facilitating the insertion into the latching openings (19), (19').

8. Adjusting device according to one of the preceding claims, **characterized in that** the gear housing (14) has a division into housing segments (15), (15'), the division running through the holder of the spindle (4).

9. Adjusting device according to one of Claims 1 to 7, **characterized in that** the gear housing (14) is formed as a single piece and has a shaft (26) which runs from the outside into the region of the spindle holder and into which the gear element acting together with the spindle (4) can be inserted.

## Revendications

1. Dispositif de réglage, en particulier pour le siège d'un véhicule, comprenant au moins un premier rail et un deuxième rail réalisé de manière déplaçable par rapport au premier rail, une broche (4) connectée au premier rail de manière fixe en rotation et en translation, et un boîtier de transmission (14) disposé sur le deuxième rail, traversé par la broche, qui est prévu pour recevoir au moins un élément de transmission agissant avec la broche, le boîtier de transmission (14) étant fixé directement par engagement par correspondance géométrique sur le deuxième rail associé, **caractérisé en ce que** le boîtier de transmission (14) est introduit de manière fixe en translation et déplaçable en hauteur dans le deuxième rail, notamment le rail supérieur (2) d'un siège de véhicule.

2. Dispositif de réglage selon la revendication 1, **caractérisé en ce que** la broche (4) est disposée sur le rail inférieur (1) d'un siège de véhicule.

3. Dispositif de réglage selon la revendication 1 ou 2, **caractérisé en ce qu'**un écrou de broche (6) pouvant être entraîné par le biais d'une transmission à vis sans fin est disposé dans le boîtier de transmission (14).

4. Dispositif de réglage selon l'une quelconque des revendications précédentes, **caractérisé en ce que** le deuxième rail présente au moins une branche (16) de préférence verticale, avec des dispositifs d'encliquetage, dans lesquels le boîtier de transmission (14) peut être inséré.

5. Dispositif de réglage selon la revendication 4, **caractérisé en ce que** les dispositifs d'encliquetage présentent des ouvertures d'encliquetage (19), (19') espacées les unes des autres dans la direction longitudinale du rail, dans lesquelles peuvent être insérées des saillies d'encliquetage (18), (18') du boîtier de transmission (14).

6. Dispositif de réglage selon la revendication 5, **caractérisé en ce que** les ouvertures d'encliquetage (19), (19') sont disposées sur des branches (16), (16') opposées, s'étendant essentiellement parallèlement l'une à l'autre, du deuxième rail.

7. Dispositif de réglage selon la revendication 5 ou 6, **caractérisé en ce que** les saillies d'encliquetage (18), (18') du boîtier de transmission (14) présentent des biseaux d'insertion (17) facilitant l'insertion dans les ouvertures d'encliquetage (19), (19').

8. Dispositif de réglage selon l'une quelconque des revendications précédentes, **caractérisé en ce que** le boîtier de transmission (14) présente une division en segments de boîtier (15) s'étendant à travers le logement de la broche (4).

9. Dispositif de réglage selon l'une quelconque des revendications 1 à 7, **caractérisé en ce que** le boîtier de transmission (14) est réalisé d'une seule pièce et présente un conduit (26) s'étendant depuis l'extérieur jusque dans la région du logement de broche, dans lequel peut être inséré l'élément de transmission agissant avec la broche (4) .
